# EUROPEAN PATENT SPECIFICATION

(11) **EP 3 837 936 B1**
(45) Date of publication and mention of the grant of the patent: **21.08.2024**
(21) Application number: 19217204.7
(22) Date of filing: 17.12.2019
(51) Int. Cl.: A01B 17/00, A01B 3/00

(54) **SKIMMER FOR AN AGRICULTURAL PLOUGH**
SKIMMER FÜR LANDWIRTSCHAFTLICHEN PFLUG
RASETTE POUR CHARRUE AGRICOLE

(43) Date of publication of application: 23.06.2021
(73) Proprietor: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 693 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: Heuking Kühn Lüer Wojtek PartGmbB

(56) References cited:
- EP-A1- 3 300 557
- WO-A1-2004/032601
- CN-U- 201 935 770
- DE-A1- 3 833 534
- DE-A1- 4 222 108
- US-A- 5 992 533
- US-A1- 2005 005 704

## Description

### Background of the Invention

The invention relates to a skimmer for an agricultural plough, particularly but not exclusively for a plough implement. Another aspect of the invention relates to the use of a skimmer for determination of sensor data. The invention further relates to an agricultural plough and an agricultural machine comprising the new skimmer.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clodhandling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset from each other when the plough is in use. Each plough body is connected to the plough frame via corresponding beams. The plough frame, in turn, is connected to a towing or pushing vehicle via a hitch arranged at a front or back end of the frame.

In addition to the plough bodies, it is known to use so-called "plough skimmers". Typically, one skimmer is placed in front of every plough body. The purpose of the plough skimmers is primarily to cut a shallow layer off the top of the ground surface before the soil is turned over by the plough bodies. The use of plough skimmers results in a more even ploughing result and reduces the amount of plant residues left on the ground surface after ploughing. Accordingly, the use of skimmers further reduces the possibility of inadvertent plant growth in ploughed fields. US 5 992 533 discloses a plough implement provided with skimmers and collecting data through implement sensors.

Depending on the contours of the work area and the status of the soil, there is a need for adjustment of several of the plough components to achieve the desired tillage results. For example, harder soils may require the ground-engaging tools of the plough to be lifted so as to reduce the drag and increase the service life of such ground-engaging tools. Similarly if the plough is operating on uneven fields, it may be necessary to frequently adjust the working depth of the ground-engaging tools to ensure homogenously deep furrows.

Some of the above environmental factors, such as the soil status, can be challenging to determine. Often, the operator has to rely on his/her knowledge of the work area to estimate the soil condition during a ploughing operation. Alternatively, the field may be ploughed sub-optimally.

In view of the aforementioned problem, there is a need for a simplified means of determining the operating conditions of the field.

It is an aim of the invention to solve or at least ameliorate one or more of the problems discussed above.

### Summary of the Invention

Aspects and embodiments of the invention provide a plough implement including a skimmer and a method for using such a plough implement including a skimmer as claimed in the appended claims.

According to a first aspect of the invention there is provided a plough implement of an agricultural plough, the plough implement including a skimmer comprising a sensor device for determination of sensor data, when in use, said sensor data comprising field data indicative of a field condition of a field across which the plough implement is being moved and/or plough data indicative of operating conditions of the agricultural plough.

The field data may be indicative of one or more of:
a moisture content of the soil;
soil density levels;
a temperature of the soil;
contours of the field;
a type of plant residues to be buried;
a soil type; and
obstacles within the soil.

The plough data may be indicative of one or more of:
a location of the plough within the field;
a speed of the agricultural plough and/or an associated agricultural work vehicle;
an orientation of the plough;
a ploughing resistance experienced by the agricultural plough or the skimmer; and
a working depth of the skimmer.

In another embodiment, the sensor device comprises a force sensor.

In yet another embodiment, the skimmer comprises a skimmer body for contacting the soil during operation, the force sensor being attached to the skimmer body.

The force sensor may be attached to a rear surface of the skimmer body, the rear surface facing away from the direction of travel, when in use.

The force sensor may be a deformation sensor.

The sensor device may comprise one or more of:
an optical sensor;
a temperature sensor;
an ultrasonic sensor;
a moisture sensor;
a level sensor; and
a location sensor.

In another aspect, there is provided an agricultural system comprising any of the above plough implements and a control unit, the control unit being configured to:
receive the sensor data; and
determine a control signal on the basis of the sensor data.

The control signal may be applicable to automatically adjust one or more operating parameters of the agricultural plough.

In another embodiment, the control signal is applicable to automatically adjust one or more of:
a skimmer working depth;
a skimmer angle;
a plough body working depth;
a pitch angle of the plough;
a roll angle of the plough;
a bias of a stone trip mechanism of the plough;
a plough width; and
a lateral position of a plough frame; and
a speed of travel of the agricultural system.

The control signal may be applicable to prompt the operator to adjust one or more operating parameters of the agricultural plough.

Another aspect of the invention relates to the use of a skimmer, forming part of an agricultural plough, for determination of sensor data, said sensor data comprising field data indicative of a field condition of a field across which the plough implement is being moved and/or plough data indicative of operating conditions of the agricultural plough.

There may be provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

In another aspect of the invention, the agricultural plough is a plough implement comprising a plurality of ground-engaging tools including at least one ground-engaging tool for penetrating and moving soil and a depth adjustment apparatus configured to adjust a working depth of the at least one ground-engaging tool. The plough implement further comprises a control unit for receiving control data indicative of at least one of an operation of the plough implement or a field condition of a field across which the plough implement is being moved, wherein the control unit is configured to automatically control an operation of the depth adjustment apparatus in a manner that adjusts a working depth of the at least one ground-engaging tool on the basis of the control data received.

In another aspect of the invention, there is provided an agricultural machine comprising an agricultural work vehicle, such as a tractor, and any embodiment of the plough implements described herein, optionally wherein the plough implement is connected to the front or rear of the agricultural work vehicle.

The agricultural work vehicle (or tractor) may include one or more control devices, such as but not limited to programmable or non-programmable processors. Similarly, the plough implement may include one or more control devices, such as but not limited to programmable or non-programmable processors. Additionally or alternatively, the plough implement may be controlled by one or more control devices of the agricultural work vehicle. Similarly, the agricultural work vehicle may be controlled by one or more control devices of the plough implement. In one embodiment, one or more control devices may control the agricultural work vehicle on the basis of sensor data received from a sensor device connected to a skimmer of the plough implement.

The agricultural work vehicle and/or the plough implement may be remotely controlled, e.g. from a farm office. Accordingly, the agricultural work vehicle may include one or more communication interfaces for connection to a remote processor and/or a remote controller. Similarly, the plough implement may include one or more communication interfaces for connection to a remote processor and/or a remote controller.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief Description of the Drawings

One or more embodiments of the invention will now be described by way of example only, with reference to the accompanying drawings, in which:
Figure 1A shows a left-side view of an exemplary plough implement;
Figure 1B shows a right-side view of the plough implement of Figure 1A;
Figure 1C shows a top view of the plough implement of Figure 1A;
Figure 2 shows a schematic trajectory of an agricultural machine when working a field;
Figure 3 shows a perspective view of a reversible skimmer according to an embodiment of the invention.
Figures 4A and 4B show enlarged perspective views of one end of the skimmer shown in Figure 3.
Figure 5 shows a perspective view of a reversible skimmer according to an embodiment of the invention.
Figure 6 shows a flow diagram of an embodiment of the method of the invention.

### Detailed Description of the Drawings

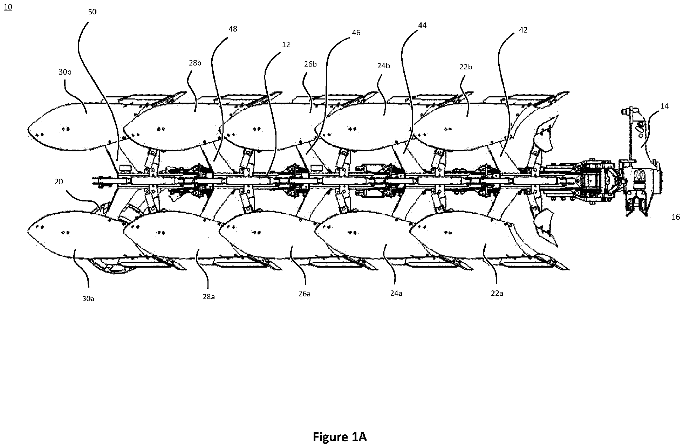

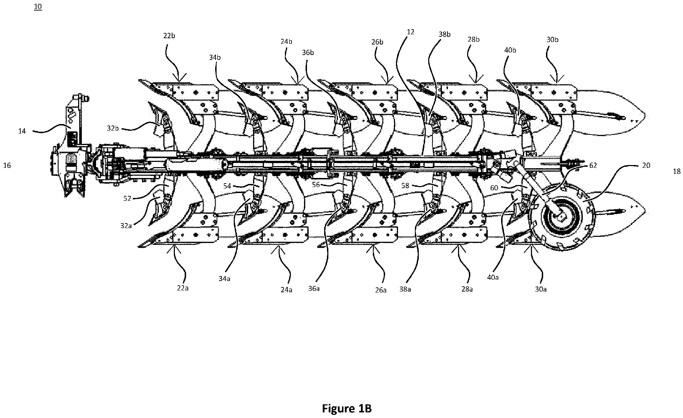

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 may be a rectangular tube extending between a headstock 14 at a front end 16 of the plough towards a plough wheel 20 at a rear end 18 of the plough. The main frame 12 supports a variety of ground-engaging tools. In the example of Figures 1A to 1C, the ground-engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure, because it simultaneously connects two plough bodies to the main frame 12, as discussed below.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

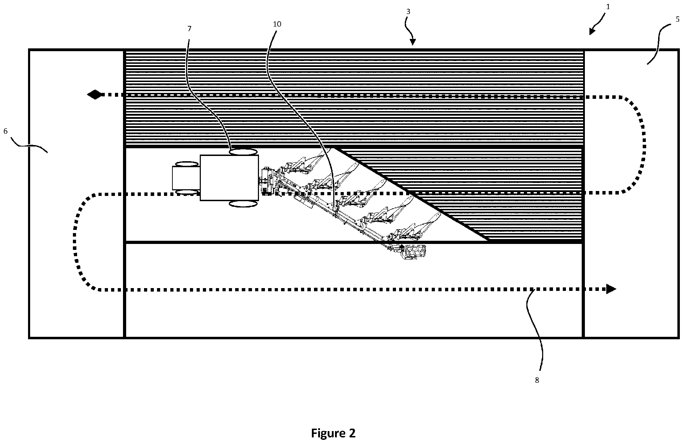

Turning to Figure 2, a typical operation of agricultural machinery comprising a tractor 7 and a plough 10 is described. In use, the plough 10 is drawn as an attachment (implement) behind an agricultural towing vehicle (e.g. tractor 7). It will be appreciated that it is equivalently feasible to locate the plough 10 in front of or both in front of and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory of the tractor and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C, creates a total of five furrows per run.

At the end of each run/working row the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5 and 6 more than necessary, it is known to lift the ground-engaging tools, such as the plough bodies and the skimmers, off the ground into a headland or transfer position, just before the plough 10 reaches the headland 5 or 6 respectively. Once the tractor 7 and the corresponding plough 10 have turned on the headland 5, 6, the ground-engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movements on the headlands the plough 10 is also reversed. That is, the main frame 12 is rotated by about 180 degrees with respect to the headstock 14 to move the plough from a first configuration to a second configuration. It will be appreciated that if the operator is ploughing in the furrow, then the main frame 12 may not be rotated by exactly 180 degrees, it is more likely to be 190-200 degrees or 160-170 degrees depending on the direction in which the main frame 12 turns. If the operator is ploughing on-land, then the main frame 12 may be rotated by an angle that is closer to 180 degrees, perhaps exactly 180 degrees.

In its first configuration shown in Figures 1A to 1C, the plough 10 is set up such that a first set of plough bodies 22a, 24a, 26a, 28a, and 30a and the first set of skimmers 32a, 34a, 36a, 38a, 40a of each of the pairs are in contact with the soil. This first configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second configuration (not illustrated), the plough 10 is set up such that second set of plough bodies 22b, 24b, 26b, 28b, and 30b and the second set of skimmers 32b, 34b, 36b, 38b, 40b of each of the pairs are in contact with the soil. This second configuration is achieved after rotating the main frame by 180 degrees, such that the majority of plough bodies are arranged to the right of the tractor (not shown). It follows that the second configuration is also referred to as the "left turning configuration".

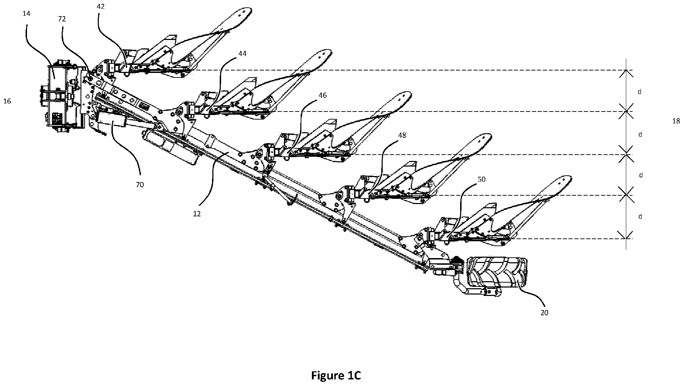

Tilling the field with the plough 10 in this first configuration provides a first furrow created by the first plough body 22a, a second furrow created by the second plough body 24a, a third furrow created by the third plough body 26a, a fourth furrow created by the fourth plough body 28a and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. The furrow width d may be adjustable via a plough width adjustment actuator 70. When activated, the plough width adjustment actuator 70 pivots the main frame 12 with respect to headstock about a pivot 72. Accordingly, the angle of the main frame 12 changes with respect to a ploughing direction. As the angle of the main frame increases with respect to the ploughing direction, the lateral plough width and the furrow width d increase.

As the reversible plough 10 reaches the end of the first run, the main frame 12 is rotated by 180 degrees (reversed) with respect to the headstock 14. A turning cylinder (not shown), attached to the headstock 14 is typically used to rotate (reverse) the plough 10. During rotation of the main frame, the first set of plough bodies, e.g. 22a, 24a, 26a, 28a, 30a, are transferred to the top of the plough 10. At the same time, the second set of plough bodies e.g. 22b, 24b, 26b, 28b, 30b, that were not in use in the previous run is then transferred to the lower end of the plough 10 and become submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

Turning back to Figures 1A to 1C the respective skimmers 32a, 32b, 34a, 34b, 36a, 36b, 38a, 38b, 40a, 40b are attached in front of the associated plough bodies 22a, 22b, 24a, 24b, 26a, 26b, 28a, 28b, 30a, 30b. A first pair of skimmers 32a, 32b is arranged in front the first pair of plough bodies 22a, 22b. A second pair of skimmers 34a, 34b is arranged in front of the second pair of plough bodies 24a, 24b. A third pair of skimmers 36a, 36b is attached in front of the third pair of plough bodies 26a, 26b. A fourth pair of skimmers 38a, 38b is attached in front of the fourth pair of plough bodies 28a, 28b. A fifth pair of skimmers 40a, 40b is attached in front of the fifth pair of plough bodies 30a, 30b.

The skimmers 32a, 32b, 34a, 34b, 36a, 36b, 38a, 38b, 40a, 40b are arranged higher than their corresponding plough bodies 22a, 22b, 24a, 24b, 26a, 26b, 28a, 28b, 30a, 30b so as not to penetrate the soil as far as the plough bodies. It follows that the skimmers 32a, 32b, 34a, 34b, 36a, 36b, 38a, 38b, 40a, 40b are configured to lift only a top layer off the ground surface before the soil is turned over by the plough body that is arranged immediately behind the skimmer.

Each pair of skimmers 32a, 32b, 34a, 34b, 36a, 36b, 38a, 38b, 40a, 40b is attached to the main frame 12 by means of a mounting assembly 52, 54, 56, 58, 60. The length of the mounting assemblies 52, 54, 56, 58, 60 determines the distance between the main frame 12 and the skimmers, and thus the working depth of the skimmers 32a, 32b, 34a, 34b, 36a, 36b, 38a, 38b, 40a, 40b. In more traditional ploughs, the length of the mounting assemblies 52, 54, 56, 58, 60 is non-adjustable. The same is true for the plough bodies 22a, 22b, 24a, 24b, 26a, 26b, 28a, 28b, 30a, 30b, as traditional beams 42, 44, 46, 48, 50 are not adjustable.

Adjustment of the working depth of the skimmers 32a, 32b, 34a, 34b, 36a, 36b, 38a, 38b, 40a, 40b and the plough bodies 22a, 22b, 24a, 24b, 26a, 26b, 28a, 28b, 30a, 30b may be achieved by means of a linkage 62 that attaches the plough wheel 20 (or depth wheel) to the frame 12. As linkage 62 is shortened the main frame 12 moves closer to the ground surface, thereby increasing the working depth of the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. The inverse is the case if linkage 62 is extended, such that the main frame 12 is distanced further from the ground surface thereby pulling the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b out of the ground.

It will be appreciated that extending and retracting the linkage 62 will mainly raise or lower the back end of the plough 10. In order to evenly raise the front and the back end of the plough 10, the headstock 14 may be raised or lowered together with an adjustment of the linkage 62 of the plough wheel 20. Raising or lowering the headstock 14 may be achieved by means of hydraulic cylinders connected to lifting arms of the agricultural work vehicle that carry the headstock 14.

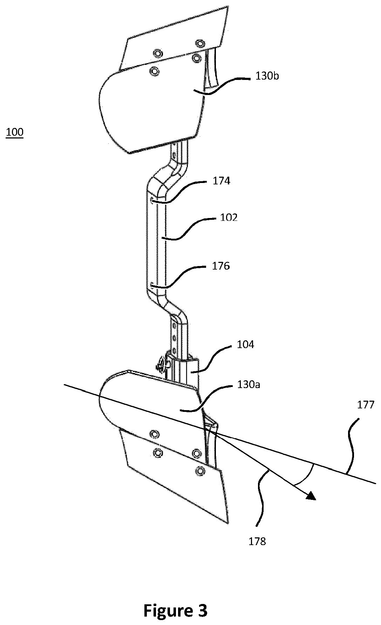

In order to provide some flexibility in the depth ratio between the plough bodies and the skimmers, other ploughs allow for an adjustment of the working depth of individual skimmers 32a, 32b, 34a, 34b, 36a, 36b, 38a, 38b, 40a, 40b with respect to the frame. An example of a skimmer that allows individual adjustment of the skimmer working depth with respect to the main frame 12 is shown in Figure 3. The skimmer 100 is connected to the main frame 12 of the plough 100 by means of a mounting rail 102. It should be noted that the skimmer 100 may either be mounted on a conventional, non-reversible plough or on a reversible plough, such as the plough 10 shown in Figures 1A to 1C. In the latter scenario, the skimmer 100 is constructed as a reversible skimmer as shown in Figure 3.

The mounting rail 102 carries two skimmer support brackets 104 (only the lower support bracket is visible), one for a first (lower) skimmer body 130a and one for a second (upper) skimmer body 130b. The mounting rail 102 may be a solid rail with a polygonal cross-section. The mounting rail 102 may be removably connected to the main frame 12 via mounting holes 174, 176. Mounting holes 174, 176 can be aligned with and connected to attachment lugs (not shown) on the main frame 12. The two skimmer support brackets 104 of the mounting rail 102 can be adjusted independently. In other words, the lower skimmer support bracket 104 can be used to adjust the depth of the lower skimmer body 130a independently of the depth of the upper skimmer body 130b that is set by the upper skimmer support bracket (not shown).

The skimmer bodies 130a, 130b of the skimmer 100 are arranged at a skimmer angle 177 with respect to a direction of travel 178 of the agricultural machinery. The skimmer angle 177 is an angle of rotation of the skimmer bodies 130a, 130b in a horizontal plane. The skimmer angle 177 may influence the soil flow of the soil top layer that is turned over by the skimmer. Although this is not specifically represented in the illustration of Figure 3, the skimmer angle 177 of the skimmer bodies 130a, 130b may be automatically adjustable, e.g. by means of a hydraulic/electric actuator arranged between the mounting bracket 104 and the respective skimmer body 130a, 130b.

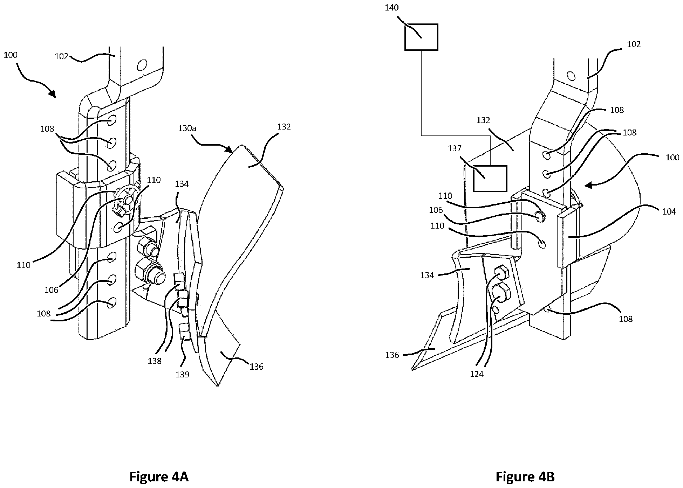

The skimmer support brackets 104 surround a part of the length of mounting rail 102, as is illustrated in more detail Figures 4A and 4B. In this example, the skimmer support brackets 104 have a collar-like shape that matches the shape of the mounting rail 102. In other words, an inner surface of the skimmer support bracket 104 matches the outer surface of the mounting rail 102.

Figures 4A and 4B illustrate only the lower part of the skimmer 100 shown Figure 3. The lower skimmer body 130a generally comprises three parts that are removably attached to each other: a mouldboard 132, a saddle or frog 134, and a share 136. The mouldboard 132 of the skimmer body 130a is connected to the saddle or frog 134. In this embodiment, the mouldboard 132 is removably connected to the frog 134 by means of various fastening members 138. Adjacent to the mouldboard 132, there is provided the share 136. The share 136 is arranged below the mouldboard 132 in the configuration shown in Figures 4A and 4B. The share 136 is removably connected to the frog 134 by means of a fastening member 139. The share 136 is designed to engage the soil and lift off a top layer of the soil while the mouldboard 132 will overturn the so lifted soil in preparation for the plough bodies.

The skimmer body 130a is attached to the skimmer support bracket 104 at a back end of the frog 134. The frog 134 is connected to the skimmer support bracket via one or more fastening members 124. The skimmer support bracket 104 is connected to the mounting rail 102 via a removable locking pin 106. To this end, the locking pin 106 may extend through the skimmer support bracket 104 and the mounting rail 102. The mounting rail 102 comprises a plurality of mounting holes 108 distributed along its length. In the example of Figures 4A and 4B, the mounting holes 108 of the mounting rail 102 are distributed equidistantly along the length of the mounting rail 102. The mounting holes 108 of the mounting rail 102 are sized to receive the locking pin 106.

The mounting bracket 104 comprises mounting holes 110 sized to receive the locking pin 106. The mounting holes 110 of the skimmer support bracket 104 are arranged either side of the mounting rail 102, when the support bracket 104 is slipped over the mounting rail 102. In the example of Figures 4A and 4B, the skimmer support bracket 104 comprises two mounting holes 110 on both sides of the mounting rail 102. The longitudinally spaced mounting holes 110 on each side of the skimmer support bracket 104 are offset from each other by a distance that is slightly larger than a distance between the mounting holes 108 of the mounting rail 102. Accordingly, the position of the skimmer support bracket 104 with respect to the mounting rail 102 can be changed by aligning the support bracket 104 with different mounting holes 108 of the mounting rail 102.

As the plough starts moving and the skimmers are introduced into the soil, a reactive force is applied to the skimmers by the soil. The reactive force acts in a direction opposite to the ploughing direction of the plough 10. The reactive force will act on the skimmer bodies 130a/130b and typically cause slight deformation of the shape of any or all of the skimmer mouldboard 132, the frog 134, or the skimmer share 136.

Figure 4B shows two examples of sensor devices for determination of sensor data that may be provided to a control unit of an agricultural plough. In some embodiments, the sensor data includes field data that relates to conditions/characteristics of the field across which the plough is moved. The field data may, therefore, include soil status, such as a soil type, a soil density, a soil moisture content, or a soil temperature. Additionally or alternatively, the field data may comprise information about the ground-contours of the field, such as a longitudinal gradient or a lateral gradient of the field. Field data may also include a type of plant residue to be buried by the agricultural plough and any other relevant characteristic of the field to be ploughed.

In some embodiments, the sensor data may alternatively or additionally include plough data that is associated with the operation of the agricultural plough. The sensor data may thus be indicative of any suitable plough parameter. In some examples, the plough data may comprise speed data regarding the speed of the agricultural plough and/or the speed of an associated tractor. The plough data may also comprise working depth data regarding the working depth of the skimmer. In other examples, the plough data may include orientation data regarding the orientation of the agricultural plough. For instance the orientation data may be indicative of a longitudinal or lateral orientation of the agricultural plough with respect to the direction of travel.

Generally, it should be understood that each of the field data and plough data mentioned above could be determined by a variety of suitable skimmer sensor devices. Some exemplary sensor devices are described in more detail below.

Figure 4B schematically illustrates a sensor device comprising a force sensor 137 mounted on the back of the skimmer mouldboard 132. Of course, such a force sensor could take any suitable shape and is only illustrated as a "black box" in the figure. For example, the force sensor 137 could extend over the entire back surface of the mouldboard 132 or be arranged locally as shown in in Figure 4B. Moreover, the force sensor 137 may be arranged on any part of the skimmer bodies 130a, 130b. In particular, the force sensor could also be arranged on the frog 134 or the share 136 of the respective skimmer body 130a or 130b. The force sensor could also span across the entire skimmer body 130a or 130b on any surface. The force sensor 137 in this embodiment is a deformation sensor.

The use of a force sensor 137 enables measurements of the reactive force and thus the amount of drag caused by the current working conditions. In one example, the sensor data (i.e. force data) generated by the force sensor 137 of the skimmer 100 may be used by a corresponding control unit 140 to determine the status of the soil. To this end, the force sensor 137 of the skimmer 100 may be connected to a control unit 140 that is associated with the plough 10. The control unit 140 may read the sensor data, i.e. the force values measured by the sensor 137 and, in some applications together with measurements of the current working depth of the skimmer and the speed of travel of the tractor, may determine the status of the soil. Generally, it will be understood that higher forces experienced by the force sensor 137 are an indication for harder soils, whereas softer soils will cause reduced deformation/forces detected by the force sensor 137. The control unit 140 may be calibrated for known soil conditions. It follows that the control unit 140 of this example may be configured to calculate or look up certain field conditions, such as the density of the soil on the basis of the sensor data, e.g. the force measurements, provided by the force sensor 137.

In another embodiment, the force data provided by the force sensor 137 may be used by the control unit 140 to determine an orientation of the agricultural plough. As mentioned before, the skimmer 100 may be fixed to the frame of the plough implement. Accordingly, any change in the plough orientation will also affect the orientation of the skimmer. If, for example, the back end of a plough is lowered, a bottom edge of each of the skimmers may be shifted forwards such that forces measured at the bottom edge of the skimmer 100 may increase during use. This increase in force measured by the force sensor and provided to the control unit as force data, may be used by the control unit 140 to determine a longitudinal orientation of the main frame of the plough. The control unit 140 of this example may be configured to calculate or look up the orientation of the plough on the basis of the sensor data, e.g. the force measurements, provided by the force sensor 137. Additionally or alternatively, the skimmer sensor may comprise a level sensor for providing plough data indicative of an orientation of the plough within the field. The level sensor may provide level data to the control unit. The control unit may compare the level data to an expected orientation of the plough and adjust one or more of the plough operating parameters on the basis of this comparison. For, example, if on the basis of the level data the control unit determines that the plough is arranged at an angle with respect to a ground surface across which the plough is moved, the control unit may adjust a roll or pitch angle of the plough to re-align the plough with the ground surface.

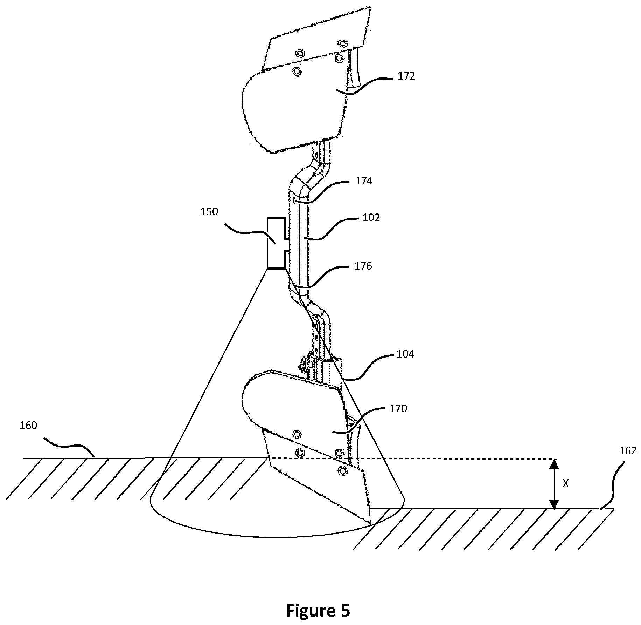

The sensor device of the skimmer of the invention may include alternative or additional sensors. For example, in an embodiment illustrated schematically in Figure 5, the sensor device of the skimmer 100 comprises an optical sensor 150. The optical sensor 150 may be configured to provide travel time data for determination of the working depth X of the skimmer 100 during operation. The travel time data provided by the optical sensor 150 may be indicative of a travel time of an optical wave between the optical sensor 150 and a ground surface 160 in front of the skimmer 100. The travel time data provided by the optical sensor 150 may also be indicative of a travel time of an optical wave between the optical sensor 150 and a base of a skimmer furrow 162 created by the skimmer 100.

The control unit may be configured to determine a skimmer working depth on the basis of the travel time data. For example, the control unit may determine a difference in travel times of the optical wave between the ground surface 160 and the skimmer furrow 162 and calculate the working depth X of the skimmer 100 (e.g. by dividing the time difference by a factor two and multiplying it with the speed of light). The travel time data is thus indicative of a plough operating condition (i.e. the skimmer working depth) and may thus be considered as plough data that is an example of the sensor data that can be provided to the control unit.

The optical sensor may also be used to observe the ground surface in front of or behind the skimmer 100. For instance, the optical sensor may be used to generate image data indicative of a kind of residue to be buried by the plough. The image data , which may be considered as residue type data, may be provided to the control unit as part of the sensor data and may include images of the residue in front of the agricultural plough. It follows that, in this embodiment, the optical sensor may best be arranged on the front-most skimmer of the plough.

The control unit may be configured to process the residue type data to determine the type of residue to be buried. For instance, the control unit may perform an object/edge recognition algorithm to identify the contours of residue shown in the image data and compare said contours to contours of plant matter stored in a database to determine the type of residue to be buried.

In another embodiment, the image data may include soil flow data indicative of a soil/residue flow created during operating of the plough. The control unit may be configured to determine soil conditions, such as the soil density, and/or a work vehicle speed, on the basis of the soil flow data. Accordingly the control unit may use the soil flow data for controlling the speed of the plough, the plough width and/or the position of the skimmers. For instance, depending on the soil density determined on the basis of the soil flow data, the control unit may adjust the position of the skimmer. To this end the control unit may determine a control signal for automatically changing the angle and/or the working depth of one or more of the skimmers. The skimmer angle may be adjustable by means of a suitable actuator mechanism that is controllable via the control signal provided by the control unit.

In another example, the image data may include light intensity data indicative of a light intensity (e.g. reflected sunlight) available at locations of the field. The control unit may be configured to store the values of the light intensity data in a database, together with their respective location in the field. To this end, the control unit may be associated with a location receiver, such as a GPS sensor, providing the control unit with location data throughout the working process. The stored light intensity data may be used by the control unit and/or the operator to calculate/optimize time for seeding, a type of crop to be planted, and/or an expected time for harvesting the crop.

In some embodiments, the sensor data may comprise both travel time data, such as the sensor data provided by the optical sensor 150; and force data, such as the sensor data provided by the force sensor 137. The control unit may use such sensor data to determine soil conditions, such as the soil density.

Other exemplary forms of sensors that may be part of the sensor device on the skimmer are set out briefly below:
Temperature sensors are another type of sensor device, which may be attached to any part of the skimmer bodies 130a, 130b. In one example, temperature sensors may be attached to the share 136 to identify the temperature of the soil during operation. The soil temperature may be provided by the temperature sensor to the control unit as soil temperature data. The soil temperature data, among other parameters, may be used by the control unit to determine a status of the soil, such as the soil density; or to automatically adjust the working depth of the plough bodies. To this end, the control unit may be configured to set the working depth of the plough bodies to ensure that the warm top layers of the unploughed land are added to the bottom of a corresponding furrow. The control unit may be configured to increase the working depth of the plough bodies as the values of the temperature data increase and vice versa. Burying the warm top layers on the bottom of the furrows may work as a heat reservoir that can speed up the soil heating and by that the seed growing process.

Other temperature sensors may be configured to determine the temperature of the skimmer bodies 130a, 130b, rather than the soil temperature, during operation. The skimmer temperature may be provided by the temperature sensor to the control unit as skimmer temperature data. The skimmer temperature data may in turn be used by the control unit to determine a ploughing resistance experienced by the agricultural plough. Alternatively or additionally, the control unit may control the plough on the basis of the skimmer temperature data, as will be described in more detail below.

Ultrasonic sensors may be attached to the skimmer 100 in order to identify field data that is indicative of subterranean obstacles such as rocks that may be buried in front of the skimmer. The sensor data produced by such an ultrasonic sensor may be used by a control unit to determine obstacle data. To this end, the control unit may determine if the sensor data shows unexpected reflections of the ultrasound waves within the soil. The control unit may then calculate the position of potential obstacles within the field on the basis of the sensor data to determine the obstacle data. It follows that obstacle data may be part of the field data. The obstacle data may be used by the control unit to decrease a bias of a plough body stone-trip arrangement as will be described in more detail below. Arranging ultrasonic sensors on the skimmer 100 is particularly advantageous due to the skimmer's typical location in front of its corresponding plough body.

Soil moisture sensors may be attached to the skimmer body 130a/130b to identify the moisture content of the soil during operation. In one embodiment, the soil moisture sensor may be a conductivity sensor. The conductivity sensor may be attached to the share 136 of the skimmer bodies 130a, 130b. The soil moisture sensors may provide soil conductivity data to the control unit. The control unit may be configured to determine the moisture content of the soil on the basis of the conductivity data.

Location sensors may be attached to the skimmer 100 to produce plough data indicative of the position and/or speed of the agricultural plough. In one example, the sensor device may comprise a GPS sensor located on the skimmer 100 so as to produce location data as part of the sensor data provided to the control unit. The control unit may determine the current speed of the agricultural plough on the basis of the location data received from the location sensor. This current plough speed may be compared by the control unit to a target plough speed as will be explained in more detail below.

As indicated above, the control unit is provided with sensor data comprising field data and/or plough data. Field data provided as part of the sensor data is indicative of current field conditions of the field across which the plough implement is being moved. In some examples, the field data may be directly representative of current field conditions, for instance if the sensor device is a temperature sensor providing soil temperature data values of the soil or if the sensor device is a moisture sensor providing moisture data values to the control unit. In other embodiments, the control unit may be configured to derive one or more of the current field conditions from the field data provided via the sensor device.

In another example, the control unit may be provided with force data as mentioned above. The control unit may then, on the basis of the force data, determine various field conditions, such as the soil density levels explained above. In yet another example, the control unit may determine obstacles within the soil on the basis of field data (i.e. the obstacle data) provided by an ultrasonic sensor.

The above also applies to the plough data provided by the sensor device as part of the sensor data. In one example, the plough data may be directly representative of operating conditions of the agricultural plough. For instance, the plough data may be level data provided by a level sensor on the skimmer that directly provides information about the orientation of the plough. In other examples, the control unit may be configured to derive one or more operating conditions of the agricultural plough from the plough data. In one example explained above, the plough data may be travel time data provided by an optical sensor (150, Figure 5). On the basis of the travel time data provided as the plough data by the sensor device, the control unit may determine a working depth of one or more of the plough skimmers.

As briefly indicated, the control unit may be configured to determine a control signal on the basis of the sensor data received from the sensor device. The control signal may be applicable to automatically adjust one or more operating parameters of the agricultural plough. Alternatively, or additionally, the control signal may be applicable to inform or prompt the operator to adjust one or more operating parameters of the agricultural plough.

Turning back to the example of Figure 4B, the control unit 140 may use the force data provided by the force sensor 137 to determine the current soil density. In one example, the control unit 140 may also be provided with a current working depth of the skimmer. The current working depth of the skimmer may be a constant value that is provided by the operator during setting up of the plough. Alternatively, the current working depth may also be provided as part of the sensor data, for example by a sensor device comprising an optical sensor 150 as shown in Figure 5. On the basis of the current skimmer working depth and the force data, the control unit may determine a current soil density.

The control unit may determine if the current working depth of the skimmer is appropriate for the current soil density determined. To this end, the control unit may look up or calculate a target skimmer working depth on the basis of the current soil density. The control unit may then compare the current skimmer working depth with the target skimmer working depth. If the difference between the current and the target working depth of the skimmer exceeds a predetermined working-depth-threshold, the control unit may generate a control signal for automatically adjusting the working depth of the skimmer. For instance, the control unit may provide a control signal that is applicable to adjust the working depth of the skimmer from the current skimmer working depth to the target skimmer working depth. Alternatively, if the skimmers of the agricultural plough are not automatically adjustable, i.e. there is no actuator mechanism that may adjust the working depth on the basis of the control signal provided by the control unit, the control unit may produce a control signal to prompt the operator to adjust the working depth of the skimmer manually.

In a similar fashion to the above, the control unit may be configured to adjust a plough body working depth on the basis of soil conditions, such as the soil density determined on the basis of the sensor data. In this example, the control unit may use the soil status derived from the sensor data to check if a current-plough body working depth is correct. To this end, the control unit may look up or calculate a target-plough body working depth and compare the target-plough body working depth with the current-plough body working depth that may either be provided by further sensor devices or by an operator input. If the difference between the target-plough body working depth and the current-plough body working depth exceeds a predetermined threshold, the control unit may determine a control signal for automatically adjusting the current-plough body working depth to the target-plough body working depth.

If the sensor device provides level data discussed above, the control unit may, on the basis of the level data, automatically adjust the pitch angle and/or the roll angle of the plough. For instance, if on the basis of the level data, the control unit determines that the plough is misaligned with respect to a ground surface of the field, the control unit may determine a control signal for automatically adjusting the pitch and/or roll angle to realign the plough with the ground surface. Various actuators for performing this adjustment are known in the art. To this end, the control unit may be configured to receive ground-surface-level data and compare values of the ground-surface-level data with values of the level data of the plough received by the sensor device of the skimmer.

In yet another embodiment, the control unit may be configured to adjust the bias of a stone trip mechanism of the plough on the basis of the sensor data received. In one example, the sensor device may be an ultrasonic sensor described above. The control unit may use obstacle data, determined on the basis of the field data provided by the ultrasonic sensor, to adjust the bias of the stone trip mechanism in advance of (e.g. less than a second before) an expected impact. In particular, the control unit may be configured to determine if a collision between one or more of the detected obstacles and one or more of the plough bodies/skimmers is expected. To this end, the control unit may further be provided with the location of the plough within the field, the working depth of one or more of the skimmers and/or one or more of the plough bodies and perhaps with the direction of travel of the agricultural plough. The control unit may then use the position of an obstacle contained in the obstacle data to determine which, if any, of the skimmers and/or plough bodies might collide with the obstacle if the plough operating parameters (e.g. the direction of travel, the working depth of the skimmers and plough bodies etc) are not changed. The control unit may then determine a control signal for reducing the bias of a known stone trip mechanism for each of the plough parts that have been identified as potentially colliding with the obstacle indicated within the obstacle data. In one example, the control unit may be configured to provide the control signal to an accumulator of a hydraulic stone trip mechanism to adjust the bias.

It should be understood that the control unit may be configured to adjust many other plough operating parameters on the basis of the sensor data provided by the sensor device on the skimmer. For example, the control unit may be configured to adjust the plough width in response to sensor data indicating that there is a change in soil density or that the plough is navigating a slope. In other examples, the lateral position of the plough frame with respect to the headstock and thus with respect to the work vehicle may be automatically adjusted by the control unit on the basis of sensor data indicating that the pull-line of the plough is not correctly set. Such sensor data may include lateral force measurements on the skimmers. Adjustment of the lateral position of the plough body may be achieved by means of a lateral shifting mechanism arranged in a known manner as part of the headstock.

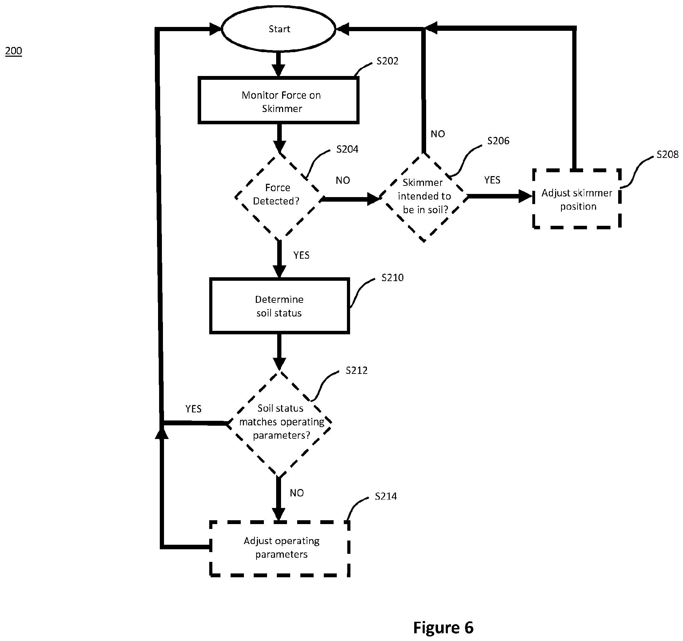

Figure 6 illustrates an exemplary embodiment of a method of using a plough skimmer for determination of sensor data. In the particular example of Figure 6 the sensor device of the skimmer comprises a force sensor, as described above in connection with Figures 4A and 4B.

In a first step S202, the force acting on the skimmer, which relates to the reactive force that is caused by the skimmer dragging through the soil, is determined by means of a suitable force sensor, such as the deformation sensor discussed hereinbefore. The force detected may be fed back as sensor data (i.e. force data) to a control unit that is associated with the plough of the skimmer.

In another step S204, a check may be performed to detect whether or not any forces are currently acting on the skimmer bodies. To this end, the control unit may compare the sensor data to a threshold value (e.g. a threshold force value) to determine if the skimmer body is currently in contact with the soil. If no significant force is detected by the control unit in step S204 (i.e. if the force values of the sensor data remain below the threshold force value), the control unit may determine that the skimmer is currently not in contact with the soil.

If at step S204, the control unit determines that the skimmer is currently not in contact with the soil, a check may be performed to determine whether or not the skimmer is supposed to be in contact with the soil at this moment in time. This check is performed in a step S206. During step S206, the control unit may determine, perhaps on the basis of plough-location data, whether the plough is currently on the main field (3 in Figure 2) or one of the headlands (5, 6 in Figure 2). If the plough is currently on the field, the control unit may determine that the skimmers are meant to be in contact with the soil. If the plough is currently on the headlands, the control unit may determine that the skimmers are not meant to be in contact with the soil. If the result of the check in step S206 is negative, i.e. the skimmer in question is currently not meant to be in contact with the soil, then no adjustment of the skimmer is required, and the method may start over again. If, however, in step S206, the control unit determines that the skimmer should have been in contact with the soil and yet no force is detected, the method may move on to a step S208 for adjustment of the skimmer position.

In step S208, the control unit has determined that, although the skimmer is intended to be in contact with the soil, no force is acting on the skimmer body. In most cases this is due to a mispositioning of the skimmer itself. Accordingly, in step S208, the control unit may act to automatically adjust the skimmer position to compensate for the lack of force detected in step S204. For instance, the control unit may send a control signal to a corresponding skimmer depth actuator. Alternatively, in ploughs with manually adjustable skimmers, the control unit may provide a control signal to a user interface to inform the operator that a skimmer adjustment is required. After adjustment of the skimmer position, the method may return to step S202 and repeat all of the above steps, until a significant force, i.e. a force that exceeds the threshold force value, is detected acting on the skimmer.

Steps S204 to S208 are illustrated in dashed lines to indicate that they are optional steps of the method. Steps S204 to S208 represent an optional sensibleness check that may be used to ensure that the skimmer remains in contact with the soil throughout the ploughing operation.

If in step S202, a force acting on the skimmer is detected, a step S210 for determination of the soil status will follow. To this end, the control unit may use the sensor data (e.g. field data) provided by the sensor device of the skimmer to determine different parameters of the soil. In the example of Figure 6 the sensor data includes force measurement values (force data), which may be processed by the control unit to determine the soil density. The control unit may have access to a database including known skimmer force values linked to certain soil density values. Such lookup tables may consider other factors, such as the working depth of the skimmers, the moisture content of the soil, the general soil type, speed of travel of the plough implement, etc. The control unit may utilise the database to look up a soil density based on the force values provided with the sensor data. Typically, higher force values correspond to denser soils and vice versa. Of course, the control unit may alternatively also calculate the soil status on the basis of the sensor data provided using an appropriate algorithm.

The method of the embodiment in Figure 6 may proceed in various ways after step S210. One way of proceeding after determination of the soil status in S210, is shown in steps S212 and S214.

In an exemplary step S212, the control unit may check if the soil status matches the operating parameters of the plough, and in particular the operating parameters of the skimmers. In one example the control unit may determine whether, based on the density of the soil, the skimmer working depth is set correctly. It will be appreciated that denser soils typically require the skimmers to be working in shallower depth, whereas softer soils allow for the skimmers to be operated at a deeper working depth. The control unit may, therefore, determine a target skimmer working depth on the basis of the soil density that is derivable from the sensor data as described above. For instance, the control unit may look up the target skimmer working depth in a database or look-up table that links appropriate target skimmer working depths to a range of soil densities. The control unit may then compare a current skimmer working depth with a target skimmer working depth that was selected by the control unit on the basis of the soil density. The current skimmer working depth may also be derivable from the sensor data received by the control unit (cf. optical sensor 150 in Figure 5). The control unit may be configured to determine if the current skimmer working depth differs from the target skimmer working depth by more than a skimmer working depth threshold. If the difference between the current skimmer working depth and the target skimmer working depth exceeds the skimmer working depth threshold, the control unit may take further steps described below with reference to step 214. Of course, it is also feasible to use the soil status to correct other operating parameters, such as the speed of the agricultural plough, the working depth of the plough bodies, etc. In other words, in step S212, the control unit may check any of the operating parameters of the plough (e.g. the working depth of the skimmer boards and/or the plough bodies) that could be affected by the soil status (e.g. the soil density), and potentially alter one or more of the operating parameters to match the requirements of the soil status determined by means of the sensor data received from the skimmer's sensor device. Exemplary sensor data and corresponding changes to the operating parameters have been discussed above.

If the check in step S212 shows that all of the operating parameters are suitable for the soil conditions determined by the control unit, no adjustments are required, and the method may return to the start. Otherwise, if the check in step S212 shows that one of more of the operating parameters do not match the soil status, the method may proceed to either automatically adjusting the operating parameters or informing the operator. In the above example, this may be the case if the difference between the current skimmer working depth and the target skimmer working depth exceeds the skimmer working depth threshold.

In an optional step S214, the control unit may adjust the operating parameters identified in step S212 that do not match the current soil status. For example, if the control unit determines in step 212 that the current skimmer working depth exceeds the target skimmer working depth by more than the skimmer working depth threshold, the control unit may produce a control signal for changing the current skimmer working depth to the target skimmer working depth. For example, if the skimmer working depth threshold is exceeded, the control unit may generate a control signal that is applicable to automatically reduce the working depth of the skimmer.

It will be appreciated that steps S212 and S214 are shown in dashed lines to highlight that these steps are optional. Alternatively, after the soil status is determined in step S210, the method may comprise another step for storing the field data (e.g. the above soil status data) in a memory device as prior-field data for future work on the same field. The prior field data may be shared with other agricultural machinery that are simultaneously or subsequently working the field.

## Claims

1. A plough implement comprising a skimmer (100) comprising a sensor device for determination of sensor data, when in use, said sensor data comprising field data indicative of a field condition of a field across which the plough implement is being moved and/or plough data indicative of operating conditions of the plough implement.

2. The plough implement of Claim 1, wherein the field data is indicative of one or more of:
moisture content of the soil;
soil density levels;
temperature of the soil;
contours of the field;
type of plant residues to be buried;
soil type; and
obstacles within the soil.

3. The plough implement of Claim 1 or Claim 2, wherein the plough data is indicative of one or more of:
a location of the plough within the field;
a speed of the agricultural plough and/or an associated agricultural work vehicle;
an orientation of the plough;
a ploughing resistance experienced by the agricultural plough or the skimmer; and
a working depth of the skimmer.

4. The plough implement of any of Claims 1 to 3, wherein the sensor device comprises a force sensor (137).

5. The plough implement of Claim 4, wherein the skimmer comprises a skimmer body (130a, 130b) for contacting the soil during operation, the force sensor (137) being attached to the skimmer body (130a, 130b).

6. The plough implement of Claim 4 or Claim 5, wherein the force sensor (137) is attached to a rear surface of the skimmer body (130a, 130b), the rear surface facing away from the direction of travel, when in use.

7. The plough implement of any of Claims 4 to 6, wherein the force sensor (137) is a deformation sensor.

8. The plough implement of any of Claims 1 to 7, wherein the sensor device comprises one or more of:
an optical sensor (150);
a temperature sensor;
an ultrasonic sensor;
a moisture sensor;
a level sensor; and
a location sensor.

9. An agricultural system comprising the plough implement of any of claims 1 to 7 and a control unit, the control unit being configured to:
receive the sensor data; and
determine a control signal on the basis of the sensor data.

10. The agricultural system of Claim 9, wherein the control signal is applicable to automatically adjust one or more operating parameters of the agricultural plough.

11. The agricultural system of Claim 10, wherein the control signal is applicable to automatically adjust one or more of:
a skimmer working depth;
a skimmer angle;
a plough body working depth;
a pitch angle of the plough;
a roll angle of the plough;
a bias of a stone trip mechanism of the plough;
a plough width; and
a lateral position of a plough frame;
a speed of travel of the agricultural system.

12. The agricultural system of any of Claims 9 to 11, wherein the control signal is applicable to prompt the operator to adjust one or more operating parameters of the agricultural plough.

13. Use of a skimmer, forming part of a plough implement of an agricultural plough, for determination of sensor data, said sensor data comprising field data indicative of a field condition of a field across which the plough implement is being moved and/or plough data indicative of operating conditions of the agricultural plough.

14. An agricultural machine comprising a work vehicle connected to a plough implement according to any of Claims 1 to 8 or an agricultural system according to any of Claims 9 to 12.

## Patentansprüche

1. Pfluggerät, das eine Pflugschar (100) umfasst, die eine Sensorvorrichtung zur Bestimmung von Sensordaten, wenn in Verwendung, umfasst, wobei die Sensordaten Felddaten, die einen Feldzustand eines Felds, über das das Pfluggerät bewegt wird, angeben und/oder Pflugdaten, die Betriebsbedingungen des Pfluggeräts angeben, umfassen.

2. Pfluggerät nach Anspruch 1, wobei die Felddaten eines oder mehrere der Folgenden angeben:
den Feuchtigkeitsgehalt des Bodens;
Bodendichteniveaus;
die Temperatur des Bodens;
Konturen des Felds;
den Typ zu vergrabender Pflanzenrückstände;
den Bodentyp; und
Hindernisse in dem Boden.

3. Pfluggerät nach Anspruch 1 oder Anspruch 2, wobei die Pflugdaten indikativ sind für eines oder mehrere der Folgenden:
einen Ort des Pflugs auf dem Feld;
eine Geschwindigkeit des landwirtschaftlichen Pflugs und/oder eines zugeordneten landwirtschaftlichen Arbeitsfahrzeugs;
eine Orientierung des Pflugs;
einen Pflügewiderstand, der durch den landwirtschaftlichen Pflug oder die Pflugschar gespürt wird; und
eine Arbeitstiefe der Pflugschar.

4. Pfluggerät nach einem der Ansprüche 1 bis 3, wobei die Sensorvorrichtung einen Kraftsensor (137) umfasst.

5. Pfluggerät nach Anspruch 4, wobei die Pflugschar einen Pflugscharkörper (130a, 130b) zum Berühren des Bodens während des Betriebs umfasst, wobei der Kraftsensor (137) an dem Pflugscharkörper (130a, 130b) angebracht ist.

6. Pfluggerät nach Anspruch 4 oder Anspruch 5, wobei der Kraftsensor (137) an einer hinteren Oberfläche des Pflugscharkörpers (130a, 130b) angebracht ist, wobei die hintere Oberfläche, wenn in Verwendung, von der Fahrtrichtung weg weist.

7. Pfluggerät nach einem der Ansprüche 4 bis 6, wobei der Kraftsensor (137) ein Verformungssensor ist.

8. Pfluggerät nach einem der Ansprüche 1 bis 7, wobei die Sensorvorrichtung eines oder mehrere der Folgenden umfasst:
einen optischen Sensor (150);
einen Temperatursensor;
einen Ultraschallsensor;
eine Feuchtigkeitssensor;
eine Nivelliersensor; und
einen Ortsensor.

9. Landwirtschaftliches System, das das Pfluggerät nach einem der Ansprüche 1 bis 7 und eine Steuereinheit umfasst, wobei die Steuereinheit konfiguriert ist zum:
Empfangen der Sensordaten; und
Bestimmen eines Steuersignals auf der Grundlage der Sensordaten.

10. Landwirtschaftliches System nach Anspruch 9, wobei das Steuersignal zum automatischen Einstellen eines oder mehrerer Betriebsparameter des landwirtschaftlichen Pflugs anwendbar ist.

11. Landwirtschaftliches System nach Anspruch 10, wobei das Steuersignal zum automatischen Einstellen eines oder mehrerer der Folgenden anwendbar ist:
einer Arbeitstiefe der Pflugschar;
eines Pflugscharwinkels;
einer Arbeitstiefe des Pflugkörpers;
eines Neigungswinkels des Pflugs;
eines Querneigungswinkels des Pflugs;
einer Vorbelastung eines Steinauslösemechanismus des Pflugs;
einer Pflugbreite; und
einer Querposition eines Pflugbaums;
einer Fahrgeschwindigkeit des landwirtschaftlichen Systems.

12. Landwirtschaftliches System nach einem der Ansprüche 9 bis 11, wobei das Steuersignal dafür anwendbar ist, den Betreiber zum Einstellen eines oder mehrerer Betriebsparameter des landwirtschaftlichen Pflugs aufzufordern.

13. Verwenden einer Pflugschar, die einen Teil eines Pfluggeräts eines landwirtschaftlichen Pflugs bildet, für die Bestimmung von Sensordaten, wobei die Sensordaten Felddaten, die einen Feldzustand eines Felds, über das das Pfluggerät bewegt wird, angeben und/oder Pflugdaten, die Betriebsbedingungen des landwirtschaftlichen Pflugs angeben, umfassen.

14. Landwirtschaftliche Maschine, die ein Arbeitsfahrzeug umfasst, das mit einem Pfluggerät nach einem der Ansprüche 1 bis 8 oder mit einem landwirtschaftlichen System nach einem der Ansprüche 9 bis 12 verbunden ist.

## Revendications

1. Un outil de labourage comprenant un écumeur de charrue (100), lequel comprend un dispositif détecteur permettant la détermination de données de capteur, lors de l'utilisation, lesdites données de capteur comprenant des données de champ indiquant l'état d'un champ à travers lequel l'outil de labourage est déplacé, et/ou des données de labourage indiquant les conditions de fonctionnement de l'outil de labourage.

2. L'outil de labourage selon la revendication 1, dans lequel les données du champ indiquent une ou plusieurs des informations suivantes :
la teneur en eau du sol ;
les niveaux de densité du sol ;
la température du sol ;
les contours du champ ;
le type de résidus végétaux à enfouir ;
le type de sol ; et
les obstacles dans le sol.

3. L'outil de labourage selon la revendication 1 ou la revendication 2, dans lequel les données de labourage indiquent une ou plusieurs des informations suivantes :
l'emplacement de la charrue dans le champ ;
la vitesse de la charrue agricole et/ou d'un véhicule agricole associé ;
l'orientation de la charrue ;
la résistance au labourage subie par la charrue agricole ou l'écumeur de charrue; et
la profondeur de travail de l'écumeur de charrue.

4. L'outil de labourage selon l'une des revendications 1 à 3, dans lequel le dispositif détecteur comprend un capteur de force (137).

5. L'outil de labourage selon la revendication 4, dans lequel l'écumeur de charrue comprend un corps d'écumeur de charrue (130a, 130b) pour un contact avec le sol pendant le fonctionnement, le capteur de force (137) étant fixé au corps de l'écumeur de charrue (130a, 130b).

6. L'outil de labourage selon la revendication 4 ou la revendication 5, dans lequel le capteur de force (137) est fixé à une surface arrière du corps de l'écumeur de charrue (130a, 130b), la surface arrière étant orientée à l'opposé de la direction de déplacement, lorsque celui-ci est utilisé.

7. L'outil de labourage selon l'une des revendications 4 à 6, dans lequel le capteur de force (137) est un capteur de déformation.

8. L'outil de labourage selon l'une des revendications 1 à 7, dans lequel le dispositif détecteur comprend un ou plusieurs des capteurs suivants :
un capteur optique (150) ;
un capteur de température ;
un capteur à ultrasons ;
un capteur d'humidité ;
un capteur de niveau ; et
un capteur de localisation.

9. Un système agricole comprenant l'outil de labourage selon l'une des revendications 1 à 7, et une unité de commande, l'unité de commande étant configurée pour :
recevoir les données du capteur ; et
déterminer un signal de commande sur la base des données du capteur.

10. Le système agricole selon la revendication 9, dans lequel le signal de commande est applicable pour ajuster automatiquement un ou plusieurs paramètres de fonctionnement de la charrue agricole.

11. Le système agricole selon la revendication 10, dans lequel le signal de commande est applicable pour ajuster automatiquement un ou plusieurs des paramètres suivants :
la profondeur de travail de l'écumeur de charrue;
l'angle de l'écumeur de charrue;
la profondeur de travail du corps de charrue ;
l'angle d'inclinaison de la charrue ;
l'angle de roulis de la charrue ;
le biais d'un mécanisme de déclenchement des pierres de la charrue ;
la largeur de la charrue ; et
la position latérale du châssis de la charrue ;
la vitesse de déplacement du système agricole.

12. Le système agricole selon l'une des revendications 9 à 11, dans lequel le signal de commande est applicable pour inviter l'opérateur à ajuster un ou plusieurs paramètres de fonctionnement de la charrue agricole.

13. Utilisation d'un écumeur de charrue faisant partie intégrante d'un outil de labourage d'une charrue agricole, permettant la détermination de données de capteur, lesdites données de capteur comprenant des données de champ indiquant l'état d'un champ à travers lequel l'outil de labourage est déplacé, et/ou des données de labourage indiquant les conditions de fonctionnement de la charrue agricole.

14. Une machine agricole comprenant un véhicule de travail relié à un outil de labourage selon l'une des revendications 1 à 8, ou un système agricole selon l'une des revendications 9 à 12.
